# EUROPÄISCHE PATENTSCHRIFT

(11) **EP 3 796 522 B1**
(45) Veröffentlichungstag und Bekanntmachung des Hinweises auf die Patenterteilung: **19.04.2023**
(21) Anmeldenummer: 20196454.1
(22) Anmeldetag: 16.09.2020
(51) Int. Cl.: H02K 1/18, H02K 7/00, H02K 7/116, H02K 15/00

(54) **MONTAGEEINRICHTUNG ZUM EINFÜGEN EINES STATORS EINER ELEKTRISCHEN MASCHINE IN EIN GETRIEBEGEHÄUSE, HYBRIDANTRIEBSMODUL UND VERFAHREN ZUM MONTIEREN EINES STATORS**
MOUNTING DEVICE FOR INSERTING A STATOR OF AN ELECTRIC MACHINE INTO A GEARBOX HOUSING, HYBRID DRIVE MODULE AND METHOD FOR MOUNTING A STATOR
DISPOSITIF DE MONTAGE PERMETTANT D'INSÉRER UN STATOR D'UNE MACHINE ÉLECTRIQUE DANS UNE BOÎTE DE VITESSES, MODULE D'ENTRAÎNEMENT HYBRIDE ET PROCÉDÉ DE MONTAGE D'UN STATOR

(30) Priorität: 20.09.2019 DE 102019214349
(43) Veröffentlichungstag der Anmeldung: 24.03.2021
(73) Patentinhaber: ZF Friedrichshafen AG, 88046 Friedrichshafen (DE)
(72) Erfinder: Jung, Andreas, 88281 Schlier (DE); Weidner, Matthias, 97535 Wasserlosen (DE); Riedisser, Thomas, 88138 Sigmarszell (DE); Pöhnlein, Florian, 88682 Weildorf (Salem) (DE); Fenn, Peter, 97534 Waigolshausen (DE); Eschenbeck, Linus, 88239 Wangen (DE)

(56) Entgegenhaltungen:
- DE-A1-102010 063 388
- DE-A1-102017 218 743
- DE-B3-102018 200 569
- JP-A- 2008 271 680
- JP-A- 2010 104 083
- JP-A- 2017 158 313
- JP-B2- 4 992 527
- US-A- 5 661 894

## Beschreibung

Die Erfindung betrifft eine Montageeinrichtung zum Einfügen eines Stators einer elektrischen Maschine, die Bestandteil eines Hybridantriebsmoduls ist, in ein glockenförmig ausgebildetes Getriebegehäuse, wobei ein Rotor der elektrischen Maschine über einen Rotorträger sowie eine Rotornabe zumindest mittelbar mit einer Getriebeeingangswelle verbunden und deren Stator, konzentrisch zum Rotor verlaufend sowie diesen radial umschließend, am Getriebegehäuse befestigbar ist.

Weiterhin betrifft die Erfindung auch ein Hybridantriebsmodul und eine Montageeinrichtung zum Einfügen eines Stators einer elektrischen Maschine, die Bestandteil des Hybridantriebsmoduls ist, in ein glockenförmig ausgebildetes, das Hybridantriebsmodul radial umschließendes Getriebegehäuse, wobei ein Rotor der elektrischen Maschine über einen Rotorträger sowie eine Rotornabe zumindest mittelbar mit einer Getriebeeingangswelle verbunden und deren Stator, konzentrisch zum Rotor verlaufend sowie diesen radial umschließend, am Getriebegehäuse befestigt ist.

Schließlich betrifft die Erfindung auch ein Verfahren zum Montieren eines Stators einer elektrischen Maschine, die Bestandteil eines Hybridantriebsmoduls ist, in ein glockenförmig ausgebildetes Getriebegehäuse, in das zuvor bereits ein Rotor eingesetzt ist.

Bei einem derartigen Hybrid-Antriebsstrang eines Kraftfahrzeugs ist in einem in Form einer Kupplungsglocke ausgebildeten Teil eines Getriebegehäuses die elektrische Maschine angeordnet, wobei ein Stator der elektrischen Maschine drehfest in die Kupplungsglocke des Getriebegehäuses eingesetzt ist. Ein zentrisch innerhalb des Stators angeordneter Rotor der elektrischen Maschine ist bei einer als Automatgetriebe ausgebildeten Ausführung mit einem Primärteil eines Drehmomentwandlers und bei einer als Handschaltgetriebe ausgebildeten Ausführung mit einer Kupplungseinrichtung verbunden, die durch eine Lamellenkupplung gebildet wird.

Um eine kompakte, bauraumsparende Anordnung zu erzielen, können bei Verwendung einer Lamellenkupplung das Kupplungs-Lamellenpaket und eine Kupplungs-Betätigungseinrichtung, räumlich gesehen, radial innerhalb der Erstreckung des Rotors angeordnet sein. Bei einer Ausführungsform mit einem Drehmomentwandler wird der radiale Raum innerhalb des Rotors ausgenutzt, um eine Wandlerüberbrückungskupplung unterzubringen. Zum Verbrennungsmotor hin wird die Kupplungsglocke durch einen Lagerschild geschlossen.

Ein glockenartig ausgebildetes Getriebegehäuse, welches in seinem Inneren ein im Wesentlichen aus einer elektrischen Maschine sowie einem Drehmomentwandler oder zumindest einer Schalttrennkupplung bestehendes Hybridantriebsmodul aufnimmt, ist aus der gattungsbildenden DE 10 2018 200 569 B3 bekannt. Dabei ist ein an das Getriebegehäuse angeflanschter und über Schrauben befestigter Lagerschild mit einem sich axial erstreckenden hülsenartigen Abschnitt, der einen Stator der elektrischen Maschine aufnimmt, in das Getriebegehäuse eingepasst. Weiterhin ist der Lagerschild mit einer Vorzentriereinheit zur Vereinfachung der Montage des Hybridmoduls an eine Kurbelwelle eines Verbrennungsmotors versehen. Der Lagerschild trennt einen Nassraum des Hybridantriebsmoduls von einem Trockenraum, wobei die Abdichtung des Nassraums zum Trockenraum über einen in dem Lagerschild angeordneten Dichtring erfolgt, welcher unmittelbar neben der Vorzentriereinheit angeordnet ist.

Weiterhin ist aus der DE 10 2017 218 743 A1 ein Verfahren zum Verbinden einer Drehmomentwandlereinheit mit einem Getriebe bekannt, wobei diese Bestandteil eines Hybridantriebsmoduls ist. Bei einem ersten Ausführungsbeispiel ist ein Rotor einer elektrischen Maschine über einen Rotorträger mit der Drehmomentwandlereinheit verbunden, und der den Rotor aufnehmende Rotorträger erstreckt sich, ausgehend von einer Wandlerschale, in axialer Richtung. Vor dem im Rahmen des Verfahrens durchgeführten Montagevorgang ist ein Stator der elektrischen Maschine an einer Halteplatte angebracht, die quer zu einer Wellenanordnung des Hybridantriebsmoduls verläuft und mit einem Getriebegehäuse verbunden ist. Die Drehmomentwandlereinheit und somit der Rotor werden in das Getriebegehäuse mittels einer Montagevorrichtung eingesetzt, die über ein erstes Montagewerkzeug und ein zweites Montagewerkzeug mit entgegengesetzt wirkenden Kräften an der Drehmomentwandlereinheit angreift. Dabei ist das erste Montagewerkzeug von einer Nut eines Eingangsabschnittes des Drehmomentwandlers aufgenommen. Das zweite Montagewerkzeug stützt sich über ein Versatzausgleichselement an der Wandlerschale ab. Auf diese Weise ist die Drehmomentwandlereinheit an ihrer Stirnseite von der Montageeinrichtung erfasst und kann in das Innere des glockenförmig ausgebildeten Getriebegehäuses eingeführt werden. Im eingebauten Zustand umschließt der Rotor den radial innen liegenden Stator. Ein weiteres Ausführungsbeispiel unterscheidet sich von dem zuvor erläuterten in der Anordnung des Rotors, der von dem im Getriebegehäuse fixierten Stator umschlossen ist.

Die JP 2017 158 313 A beschreibt ein Verfahren zum Herstellen einer rotierenden elektrischen Maschine, wobei die elektrische Maschine einen zylindrischen Stator, einen zylindrischen Rotor, welcher radial innerhalb des Stators mit einem Luftspalt dazwischen angeordnet ist, und eine scheibenförmige Seitenplatte, die an einer axialen ersten Seite angeordnet ist und an dem Rotor befestigt ist, umfasst. Die Seitenplatte erstreckt sich zu einer Position radial außerhalb des Luftspalts und weist ein Durchgangsloch an einer Position auf, die den Luftspalt in axialer Richtung gesehen überlappt. Das Herstellungsverfahren der elektrischen Maschine umfasst einen Schritt zum Vorbereiten des Stators, des Rotors und der Seitenplatte, einen Schritt zum Einstellen des Luftspalts, bei dem ein Spalteinstellelement in einem Abschnitt des Luftspalts angeordnet wird, einen Schritt zum Befestigen des Stators und des Rotors an einem Stützmechanismus, so dass der Stator und der Rotor zueinander ausgerichtet sind, und einen Schritt zum Entfernen des Spalteinstellelements durch das Durchgangsloch.

Es ist Aufgabe der vorliegenden Erfindung, für eine Anordnung eines Hybridantriebsmoduls mit den gattungsgemäßen Merkmalen eine Montageeinrichtung zu schaffen, mit der eine prozesssichere Montage des Stators ermöglicht wird, nachdem eine wesentliche, mit dem Rotor verbundene Baueinheit des Hybridantriebsmoduls innerhalb des Getriebegehäuses angeordnet wurde.

Diese Aufgabe wird ausgehend vom Oberbegriff des Patentanspruchs 1 in Verbindung mit dessen kennzeichnenden Merkmalen gelöst. Die hierauf folgenden, abhängigen Patentansprüche geben jeweils vorteilhafte Weiterbildungen der Erfindung wieder.

Danach dient eine Montageeinrichtung zum Einfügen eines Stators einer elektrischen Maschine in ein glockenförmig ausgebildetes Getriebegehäuse. Die elektrische Maschine, die Bestandteil eines Hybridantriebsmoduls ist, weist einen Rotor auf, der über einen Rotorträger sowie eine Rotornabe zumindest mittelbar mit einer Getriebeeingangswelle verbunden ist. Weiterhin ist ein Stator der elektrischen Maschine, konzentrisch zum Rotor verlaufend sowie diesen radial umschließend, am Getriebegehäuse befestigbar.

Erfindungsgemäß weist die Montageeinrichtung ein inneres Führungselement auf, das vorgesehen ist, um formschlüssig gegenüber der Rotornabe oder zumindest mittelbar der die Rotornabe aufnehmenden Getriebeeingangswelle geführt zu werden. Außerdem ist Bestandteil der Montageeinrichtung ein äußeres Führungselement, über welches die Montageeinrichtung formschlüssig am Getriebegehäuse geführt ist. Beide Führungselemente sind radial zueinander beabstandet und über zumindest ein radial verlaufendes Verbindungselement aneinander fixiert. Im Verbindungselement ist zumindest ein Schieber längsverschiebbar geführt, wobei der Schieber zwei zueinander verstellbare Schieberteile aufweist, von denen ein erstes radial äußeres Schieberteil für einen formschlüssigen Eingriff am Außenumfang des Stators und ein zweites radial inneres Schieberteil für einen Angriff an einer Stirnfläche des Stators vorgesehen sind.

Über die beiden Führungselemente kann somit zum einen die Getriebeeingangswelle mit dem Rotor gegenüber dem Getriebegehäuse zentriert werden und zum anderen die Montageeinrichtung am Getriebegehäuse ausgerichtet werden. Daher greift die Montageeinrichtung sowohl am Getriebegehäuse als auch an der Getriebeeingangswelle formschlüssig an. Es muss sich nicht um einen unmittelbaren Angriff an der Getriebeeingangswelle handeln; vielmehr kann das innere Führungselement, das vorzugsweise zumindest abschnittsweise als Hülse ausgebildet ist, auch eine auf der Getriebeeingangswelle angeordnete Nabe bzw. Hohlwelle umgreifen.

Das sich zwischen den Führungselementen radial erstreckende Verbindungselement kann als Scheibe ausgebildet sein, wobei in dieser zumindest eine Öffnung zur Aufnahme des zumindest einen Schiebers vorgesehen ist, der parallel zur Längsmittelachse der Gesamtanordnung bewegt wird. Dabei sind die beiden Schieberteile derart zueinander beweglich, dass der Stator von diesen erfasst und in eine bestimmte Stellung, was die radiale Lage und die Position in Drehrichtung anbelangt, zum Getriebegehäuse gebracht wird. Alternativ zu der Ausbildung des Verbindungselements als Scheibe kann dieses auch mit einzelnen radial verlaufenden Streben ausgebildet sein.

In weiterer Ausgestaltung der vorliegenden Erfindung wird vorgeschlagen, dass sich vom äußeren Führungselement aus Zentrierstifte axial erstrecken, wobei die Zentrierstifte für einen Eingriff in Durchgangsbohrungen des Getriebegehäuses, die in einem an diesem ausgebildeten Befestigungsflansch verlaufen, vorgesehen sind. Diese Zentrierstifte dienen daher zur Zentrierung der Montageeinrichtung und des von dieser aufgenommenen Stators gegenüber dem Getriebegehäuse, wobei sie in die entsprechenden Bohrungen, die vorzugsweise als Durchgangsbohrungen ausgebildet sind, eingeführt werden. Die Bohrungen können konstruktiv für eine spätere Befestigung eines Lagerschildes am Getriebegehäuse vorgesehen sein.

Weiterhin ist vorgesehen, dass das zweite Schieberteil für einen formschlüssigen Eingriff in die Stirnfläche des Stators vorgesehen ist, wodurch der Stator in einer bestimmten Drehlage zum Getriebegehäuse in dieses einsetzbar ist. Dabei kann das zweite Schieberteil mit sich in axialer Richtung ersteckenden Positionierstiften versehen sein, die für einen Eingriff in Zentrierbohrungen des Stators vorgesehen sind.

Der formschlüssige Angriff des ersten Schieberteils am Außenumfang des Stators kann in weiterer Ausgestaltung der Erfindung derart ausgebildet sein, dass das erste Schieberteil bajonettartig mit einer am Außenumfang des Stators vorgesehene Mitnahmefläche kuppelbar ist. Die Mitnahmefläche wird in diesem Fall durch einzelne radial über den Außenumfang des Stators vorstehende, in axialer Richtung weisende Flächensegmente gebildet, wobei am ersten Schieberteil vorgesehene radial nach innen gerichtete Mitnehmer in eine Stellung verdreht werden, dass sie hinter die einzelnen Flächensegmente greifen und so den Stator zwischen sich und den Positionierstiften fixieren.

Weiterhin können das erste und das zweite Schieberteil jeweils zumindest abschnittsweise hohlzylindrisch ausgebildet sein, wobei das zweite Schieberteil verschiebbar in dem ersten Schieberteil geführt ist, und wobei von dem ersten Schieberteil sich in axialer Richtung erstreckende Greifer ausgehen.

Die Aufgabe der Erfindung wird auch bei einem Hybridantriebsmodul und Montageeinrichtung zum Einfügen eines Stators in ein glockenförmig ausgebildetes, das Hybridantriebsmodul radial umschließendes Getriebegehäuse gelöst. Der Stator ist Bestandteil einer im Hybridantriebsmodul vorgesehenen elektrischen Maschine. Dabei ist ein Rotor der elektrischen Maschine über einen Rotorträger sowie eine Rotornabe zumindest mittelbar mit einer Getriebeeingangswelle verbunden, während deren Stator, konzentrisch zum Rotor verlaufend sowie diesen radial umschließend, am Getriebegehäuse befestigt ist.

Erfindungsgemäß soll die Montageeinrichtung eine erfindungsgemäße Montageeinrichtung sein und ein inneres Führungselement aufweisen, das während eines Montagevorgangs formschlüssig gegenüber der Rotornabe oder der die Rotornabe aufnehmenden Getriebeeingangswelle geführt ist Außerdem ist die Montageeinrichtung über ein äußeres Führungselement formschlüssig am Getriebegehäuse geführt, wobei die beiden Führungselemente radial zueinander beabstandet und über zumindest ein radial verlaufendes Verbindungselement aneinander fixiert sind. Im Verbindungselement ist zumindest ein als Greifer ausgebildeter Schieber längsverschiebbar geführt, der den Stator aufnimmt und sowohl gegenüber der Rotornabe bzw. der Getriebeeingangswelle als gegenüber dem Getriebegehäuse führt.

Beim Hybridantriebsmodul und der mit diesem zusammenwirkenden Montageeinrichtung soll weiterhin der Schieber zwei zueinander verstellbare Schieberteile aufweisen, von denen ein erstes radial äußeres Schieberteil formschlüssigen am Außenumfang des Stators und ein zweites radial inneres Schieberteil an einer Stirnfläche des Stators angreifen.

Weiterhin soll der Stator an seiner äußeren Mantelfläche Auswulstungen aufweisen, die über einen wesentlichen Teil der axialen Länge des Stators rippenartig verlaufen und an ihren rückseitigen Enden Anschraubflächen bilden, wobei von einem vorderen Abschnitt der Auswulstungen sich in Umfangsrichtung erstreckende Laschen ausgehen, die jeweils an einer Mitnahmefläche von dem äußeren Schieberteil hintergriffen werden. Über diese Auswulstungen, die in Blechpaketen des Stators vorgesehen sind, wird der Stator am Ende des Montagevorgangs an Anschraubflächen des Getriebegehäuses befestigt, weshalb innerhalb der Auswulstungen Durchgangsbohrungen verlaufen. Von jeder der Auswulstungen geht eine Lasche aus, die vorzugsweis mit geringerer axialer Länge als die Auswulstung ausgeführt ist, wobei deren Stirnseite von dem jeweiligen Mitnehmer des ersten Schieberteils hintergriffen wird.

Außerdem sollen die Laschen in axialer Richtung verlaufende Zentrierbohrungen aufweisen, in die während des Montagevorganges Positionierstifte des zweiten Schieberteils und im montierten Zustand des Stators vom Getriebegehäuse ausgehende Passstifte eingreifen. Die Zentrierbohrungen durchdringen die Laschen und sind etwas länger als die Positionierstifte ausgeführt, so dass sie von einem Ende her auf die Zentrierstifte aufgefädelt werden können, obwohl sich am anderen Ende die Positionierstifte des zweiten Schieberteils im Eingriff befinden. Die Montageeinrichtung kann darüber hinaus in der zuvor erläuterten Weise ausgebildet sein.

Die Aufgabe der Erfindung wird auch bei einem Verfahren zum Montieren eines Stators einer elektrischen Maschine, die Bestandteil eines Hybridantriebsmoduls ist, in ein glockenförmig ausgebildetes Getriebegehäuse gelöst. Dabei ist in das Getriebegehäuse zuvor bereits ein Rotor eingesetzt.

Gemäß der Erfindung wird der Stator zunächst von zwei Schieberteilen einer Montageeinrichtung an einer Stirnfläche und einer an dessen Außenumfang vorgesehenen Mitnahmefläche ergriffen und sowohl in radialer Richtung als auch in Umfangsrichtung zur Montageeinrichtung ausgerichtet. Letzteres geschieht durch Positionierstifte, die in Zentrierbohrungen von Laschen eingreifen.

In einem zweiten Verfahrensschritt wird dann die Montageeinrichtung vor dem Ende des Getriebegehäuses auszentriert, wobei ein äußeres Führungselement über in einem Flansch des Getriebegehäuses vorgesehene Bohrungen ausgerichtet und an einem inneren Führungselement eine Rotornabe und/oder Getriebeeingangswelle zentriert wird, wobei die beiden Führungselemente radial zueinander beabstandet, über zumindest ein radial verlaufendes Verbindungselement aneinander fixiert sind und wobei das innere Führungselement vorgesehen ist, um formschlüssig gegenüber der Rotornabe oder der die Rotornabe aufnehmenden Getriebeeingangswelle_geführt zu werden. Das äußere Führungselement ist vorgesehen, um formschlüssig am Getriebegehäuse geführt zu werden. Im Verbindungselement ist zumindest ein Schieber längsverschiebbar geführt, wobei der Schieber zwei zueinander verstellbare Schieberteile aufweist, von denen ein erstes radial äußeres Schieberteil für einen formschlüssigen Eingriff am Außenumfang des Stators und ein zweites radial inneres Schieberteil für einen Angriff an einer Stirnfläche des Stators vorgesehen sind.

In einem dritten Verfahrensschritt verschiebt ein durch die beiden Schieberteile gebildeter Schieber den Stator in den radialen Raum zwischen dem Rotor und dem Getriebegehäuse, bis die am Stator vorgesehenen Zentrierbohrungen auf Zentrierstifte, die vom Getriebegehäuse ausgehen, aufgeschoben sind.

In einem vierten Verfahrensschritt wird der Stator mit dem Getriebegehäuse über axial verlaufende Schrauben verschraubt. Entsprechende Bohrungen zur Aufnahme der Schrauben verlaufenden neben den Zentrierbohrungen, parallel zu diesen.

Schließlich wird in einem fünften Verfahrensschritt die Montageeinrichtung zunächst vom Stator sowie anschließend vom Getriebegehäuse und der Rotornabe bzw. Getriebeeingangswelle getrennt.

Eine vorteilhafte Ausführungsform der Erfindung, die nachfolgend erläutert wird, ist in den Zeichnungen dargestellt. Es zeigen:
- Figur 1: eine Teilansicht mit einem Längsschnitt durch ein Getriebegehäuse mit einem in diesem angeordneten Hybridantriebsmodul, das im Wesentlichen eine elektrische Maschine, eine Schalttrennkupplung und eine Vorübersetzungsstufe aufweist,
- Figur 2: als Teilansicht eine schematische Darstellung, betreffend die Ausrichtung und Befestigung des Stators im Getriebegehäuse,
- Figur 3: eine perspektivische Darstellung des Stators, wobei auf diesen, wie durch einen Richtungspfeil verdeutlicht, die Schieberteile der Montageeinrichtung aufgesetzt werden,
- Figur 4: eine perspektivische Darstellung des Stators im Bereich einer radialen Auswulstung,
- Figur 5: als schematische Darstellung, das Fixieren des Stators im Schieber der Montageeinrichtung,
- Figur 5a: die Montageeinrichtung, die am Getriebegehäuse und über eine Hohlwelle an einer Getriebeeingangswelle angreift,
- Figur 5b: das Auffädeln des Stators auf Zentrierstifte, die im Getriebegehäuse angeordnet sind,
- Figur 5c: das Einsetzen von Befestigungsschrauben in den Stator und dessen Verspannen mit dem Getriebegehäuse und
- Figur 5d: das Trennen der Montageeinrichtung vom Stator, der Getriebeeingangswelle und dem Getriebegehäuse.

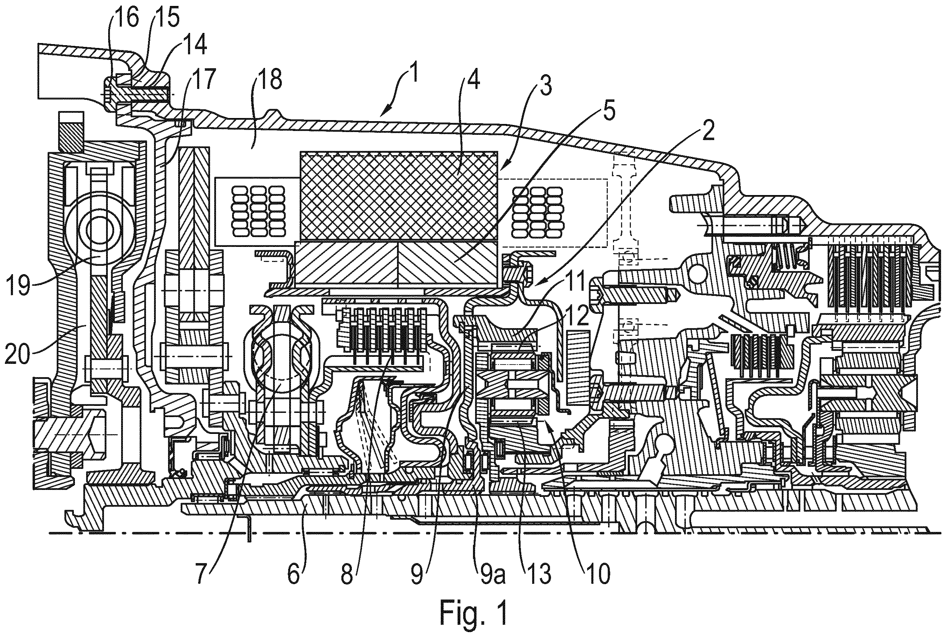

In der Figur 1 ist mit 1 ein vorderer Abschnitt eines Getriebegehäuses bezeichnet, der in der Art eines Kupplungsgehäuses glockenartig ausgebildet ist, um mit einem nicht näher bezeichneten Kurbelgehäuse eines Verbrennungsmotors verschraubt zu werden. Das Getriebegehäuse 1 nimmt in seinem Inneren ein Hybridantriebsmodul 2 auf, das eine elektrische Maschine 3 mit einem gegenüber dem Getriebegehäuse 1 drehfesten Stator 4 und einem drehbaren Rotor 5 aufweist. Weiterhin sind Bestandteil des Hybridantriebsmoduls 2 eine Getriebeeingangswelle 6 für ein dem Hybridantriebsmodul 2 nachgeschalteten, nicht näher dargestellten Getriebe, wobei auf der Getriebeeingangswelle 6 ein Torsionsdämpfer 7 und eine als Lamellenkupplung ausgebildete, hydraulisch betätigte Schalttrennkupplung 8 gelagert sind. Ein mit dem Rotor 5 verbundener Rotorträger 9 treibt eine Planetenradstufe 10 an, die ein formschlüssig mit dem Rotorträger 9 verbundenes 11, Planetenräder 12 und ein Sonnenrad 13 aufweist, wobei der Rotorträger 9 über eine Rotornabe 9a auf der Getriebeeingangswelle 6 angeordnet ist.

Weiterhin ist der Figur 1 zu entnehmen, dass das Getriebegehäuse 1 mehrere über seinen Umfang verteilt angeordnete Durchgangsbohrungen 14 sowie einer Flanschfläche 15 versehen ist. Mittels Inbusschrauben 16 ist ein Lagerschild 17 an der Flanschfläche 15 mit dem Getriebegehäuse 1 verspannt. Einerseits des Lagerschilds 17 befindet sich ein das Hybridantriebsmodul 2 und die Planetenstufe 10 aufnehmender Nassraum 18 und andererseits ein Trockenraum 20, in dem sich unter anderem ein Zweimassenschwungrad 19 befindet. Vor der nachfolgend erläuterten Montage des Stators 4 wird die aus dem Rotor 5, dem Rotorträger 9 und der Planetenstufe 10 auf die Getriebeeingangswelle 6 aufgeschoben.

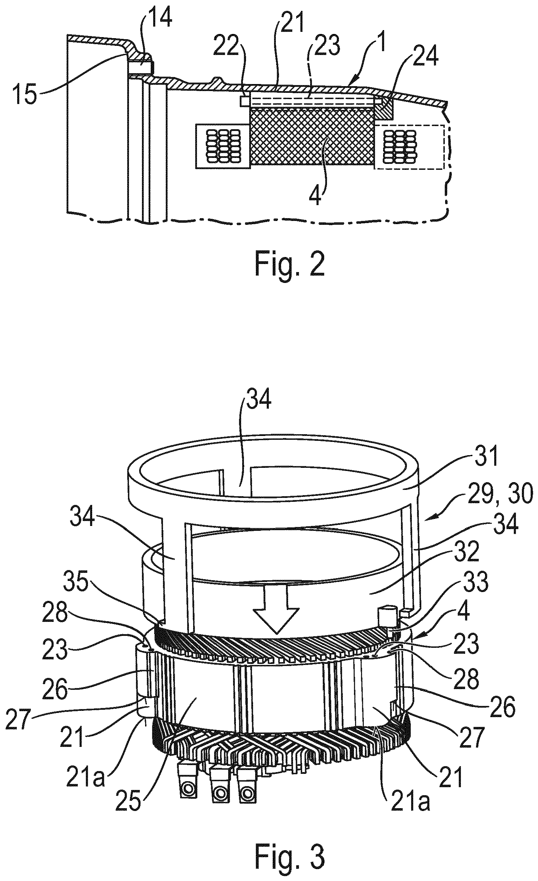

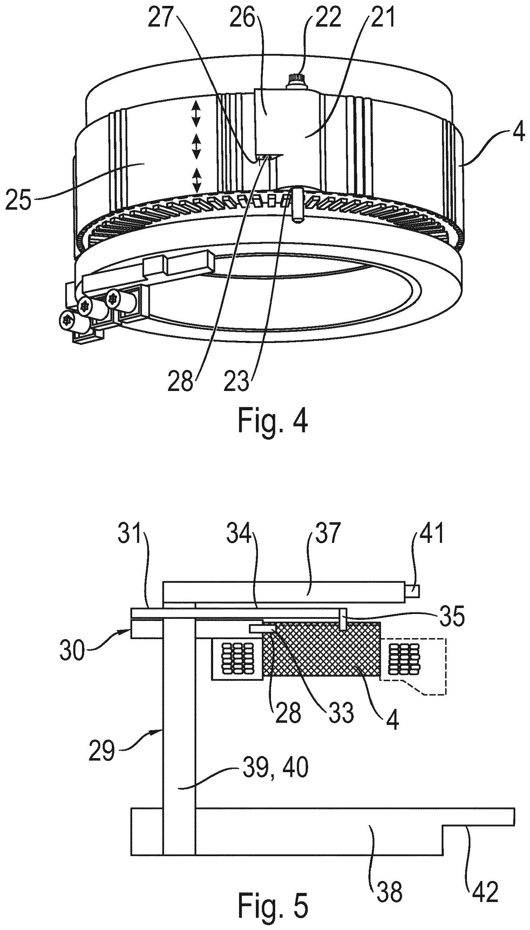

In der Figur 2 ist ein oberer Teilabschnitt des Getriebegehäuses 1 schematisch dargestellt, um zu verdeutlichen, wie der Stator 4 in diesem zu befestigen ist. Danach weist der Stator 4, wie nachfolgend noch im Einzelnen im Zusammenhang mit der Figur 4 erläutert werden wird, an seinem Außenumfang mehrere Auswulstungen 21 auf, durch die Befestigungsschrauben 22 aufnehmende Bohrungen 23 verlaufen.

Von dem Getriebegehäuse 1 gehen nach innen ragende Flanschsegmente 24 aus, in die die Befestigungsschrauben 22 mittels ihres Außengewindes eingreifen.

Die Figur 3 zeigt den Stator 4, von dessen Blechpaketen 25 die radial nach außen ragenden Auswulstungen 21 ausgehen, welche sich über die axiale Länge der Blechpakete 25 erstrecken. Jede der Auswulstungen 21 weist eine Bohrung 23 auf. Neben den Auswulstungen 21 befinden sich auf der Außenmantelfläche der Blechpakete 25 Laschen 26, die im Vergleich zu den Auswulstungen 21 eine geringere axiale Länge aufweisen. Dadurch sind an den Laschen 26 Mitnahmeflächen 27 gebildet. Im Übrigen verlaufen durch die Laschen 26 Zentrierbohrungen 28.

In der Figur 3 wird auf den Stator 4 eine Montageeinrichtung 29 gesetzt, von der in der Darstellung ein Schieber 30 sichtbar ist, welcher aus einem hohlzylindrischen ersten Schieberteil 31 und einem ebenfalls hohlzylindrischen zweiten Schieberteil 32 besteht. Das zweite Schieberteil 32 ist in dem ersten Schieberteil 31 längsverschiebbar geführt und weist Positionierstifte 33 auf, über die der Stator 4 zu diesem in Umfangsrichtung ausgerichtet wird, indem die Positionierstifte 33 in die Zentrierbohrungen 28 der Laschen 26 eingreifen. Bestandteil des ersten Schieberteils 31 sind axiale Fortsätze 34, an deren Enden sich Mitnehmer 35 befinden. Zunächst wird das erste Schieberteil 31 soweit axial bewegt, bis die Mitnehmer 35 sich in einer Ebene mit den Mitnahmeflächen 27 der Laschen 26 befinden, Anschließend erfolgt eine Drehung des ersten Schieberteils 31, so dass die Mitnehmer 35 bajonettartig an den Laschen 26 angreifen. Der Stator ist folglich an einer Stirnseite 36 der Laschen 26 und andererseits an den Mitnahmeflächen 27 fixiert.

Die Figur 4 zeigt den Stator 4 ohne die auf diesen aufgesetzt Montageeinrichtung 29, so dass die Gestaltung der Auswulstungen 21 verdeutlicht ist. Dabei sind in die Bohrungen bereits Befestigungsschrauben 22 eingesetzt. An einer in der Figur 4 dargestellten Lasche 26 ist erkennbar, dass diese gegenüber der Auswulstung 21 kürzer ausgebildet ist, wodurch an diesem Ende die Mitnahmefläche 27 gebildet wird, Außerdem geht aus dieser Ansicht eine Zentrierbohrung 28 hervor.

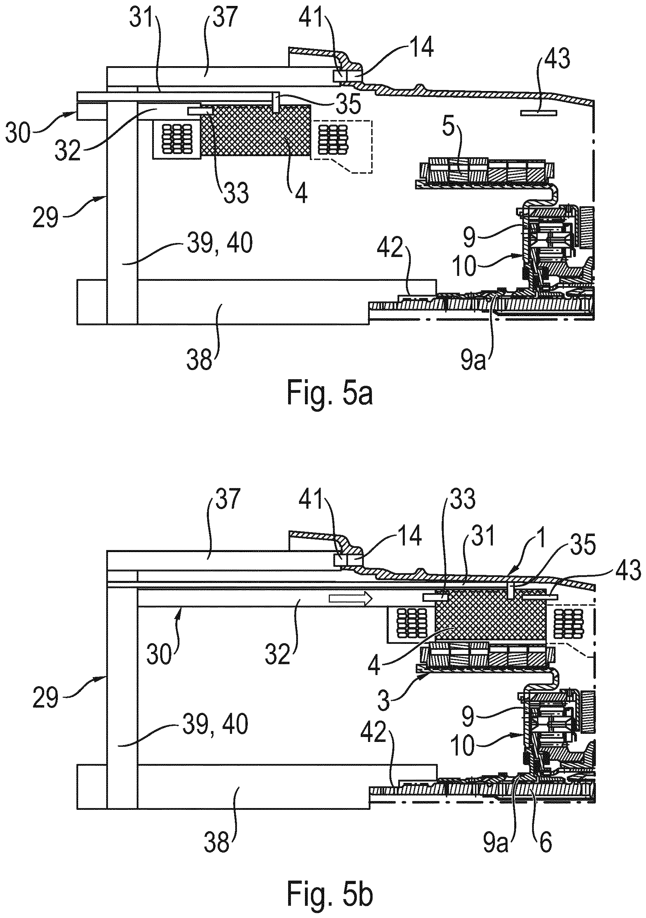

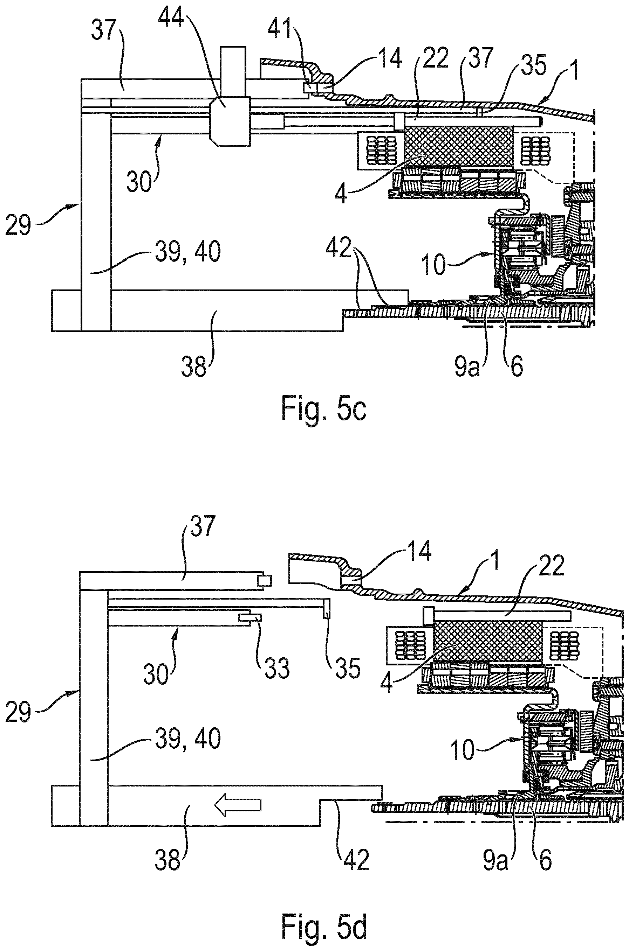

In den Figuren 5 sowie 5a - 5d sind einzelne Verfahrensschritte eines Verfahrens zum Montieren des Stators 4 der elektrischen Maschine 2 dargestellt. Wie aus diesen Figuren hervorgeht, besteht die Montageeinrichtung 29 aus einem äußeren Führungselement 37 und einem inneren Führungselement 38, die über ein radial zwischen diesen verlaufendes Verbindungselement 39 miteinander verbunden sind. Dass Verbindungselement 39 ist als Scheibe 40 ausgebildet. Wie weiterhin erkennbar ist, gehen von dem äußeren Führungselement 37 Zentrierstifte 41 aus, die sich axial erstrecken. Das innere Führungselement 38 weist eine Ausnehmung 42 auf. Weiterhin ist in dem Verbindungselement 39 der Schieber 30 längsverschiebbar geführt, wobei dieser aus dem ersten Schieberteil 31 und dem zweiten Schieberteil 32 besteht. Die Positionierstifte 33 greifen stirnseitig in den Stator 4 ein, was, wie bereits erläutert, über die Zentrierbohrungen 28 geschieht.

Die an den Fortsätzen 34 des ersten Schieberelements 31 ausgebildeten Mitnehmer 35 sind, wie durch einen Pfeil verdeutlicht ist, soweit verschwenkbar, dass sie die Mitnahmeflächen 27 hintergreifen können. Anschließend wird die Montageeinrichtung 29 gemeinsam mit dem von ihr ergriffenen Stator vor dem Ende des Getriebegehäuses 1 auszentriert. Das führt dazu, dass die Zentrierstifte 41 in die Bohrungen 14 eingeführt und das innere Führungselement 38 zum Zentrieren an der Getriebeeingangswelle 6 und der auf dieser angeordneten Antriebselemente mittelbar an dieser angreift und somit gemäß Figur 5a diese und die auf ihr angeordneten Einheiten Planetenradstufe 10 und Rotor 5 zum Getriebegehäuse 1 zentriert. Weiterhin geht aus der Darstellung nach der Figur 5a hervor, dass in diesem mehrere axial verlaufende Passstifte 43 angeordnet sind.

Nach der Figur 5b wird dann der Stator 4 mittels des Schiebers 30 der Montageeinrichtung 29 bis in den zwischen dem Rotor 5 und dem Getriebegehäuse 1 ausgebildeten Ringraum geschoben, wobei die Passstifte 43 in die Zentrierbohrungen 28 eingreifen. Gemäß der Figur 5c werden dann mittels eines Schraubers 44 die Befestigungsschrauben 22 in die Flanschsegmente 24 (siehe Figur 2) eingeschraubt. Nach der Figur 5d erfolgt schließlich eine Trennung der Montageeinrichtung 29 vom Getriebegehäuse 1 bzw. dem Stator 4.

### Bezugszeichen

- 1: Getriebegehäuse
- 2: Hybridantriebsmodul
- 3: elektrische Maschine
- 4: Stator
- 5: Rotor
- 6: Getriebeeingangswelle
- 7: Torsionsdämpfer
- 8: hydraulisch betätigte Schalttrennkupplung
- 9: Rotorträger
- 9a: Rotornabe
- 10: Planetenradstufe
- 11: Hohlrad
- 12: Planetenrad
- 13: Sonnenrad
- 14: Durchgangsbohrungen
- 15: Flanschfläche
- 16: Inbusschraube
- 17: Lagerschild
- 18: Nassraum
- 19: Zweimassenschwungrad
- 20: Trockenraum
- 21: Auswulstung
- 21a: Anschraubfläche von 21
- 22: Befestigungsschraube
- 23: Bohrung
- 24: Flanschsegment
- 25: Blechpakete
- 26: Lasche
- 27: Mitnahmefläche
- 28: Zentrierbohrung
- 29: Montageeinrichtung
- 30: Schieber
- 31: erstes Schieberteil
- 32: zweites Schieberteil
- 33: Positionierstift
- 34: Fortsätze
- 35: Mitnehmer
- 36: Stirnseite von 26
- 37: äußeres Führungselement
- 38: inneres Führungselement
- 39: Verbindungselement
- 40: Scheibe
- 41: Zentrierstift
- 42: Ausnehmung in 38
- 43: Passstift
- 44: Schrauber

## Patentansprüche

1. Montageeinrichtung (29) zum Einfügen eines Stators (4) einer elektrischen Maschine (3), die Bestandteil eines Hybridantriebsmoduls (2) ist, in ein glockenförmig ausgebildetes Getriebegehäuse (1), wobei ein Rotor (5) der elektrischen Maschine (3) über einen Rotorträger (9) sowie eine Rotornabe (9a) zumindest mittelbar mit einer Getriebeeingangswelle (6) verbunden und deren Stator (4), konzentrisch zum Rotor (5) verlaufend sowie diesen radial umschließend, am Getriebegehäuse (1) befestigbar sind, **dadurch gekennzeichnet, dass** die Montageeinrichtung (29) ein inneres Führungselement (38) aufweist, das vorgesehen ist, um formschlüssig gegenüber der Rotornabe (9a) oder der die Rotornabe (9a) aufnehmenden Getriebeeingangswelle (6) geführt zu werden, dass die Montageeinrichtung (29) ein äußeres Führungselement (37) aufweist, um formschlüssig am Getriebegehäuse (1) geführt zu werden, dass die beiden Führungselemente (37 und 38), radial zueinander beabstandet, über zumindest ein radial verlaufendes Verbindungselement (39) aneinander fixiert sind, und dass im Verbindungselement (39) zumindest ein Schieber (30) längsverschiebbar geführt ist, wobei der Schieber (30) zwei zueinander verstellbare Schieberteile (31 und 32) aufweist, von denen ein erstes radial äußeres Schieberteil (31) für einen formschlüssigen Eingriff am Außenumfang des Stators (4) und ein zweites radial inneres Schieberteil (32) für einen Angriff an einer Stirnfläche (27) des Stators (4) vorgesehen sind.

2. Montageeinrichtung nach Patentanspruch 1, **dadurch gekennzeichnet, dass** sich vom äußeren Führungselement (37) aus Zentrierstifte (41) axial erstrecken, wobei die Zentrierstifte (41) für einen Eingriff in Durchgangsbohrungen (14) des Getriebegehäuses (1), die von einem an diesem ausgebildeten Befestigungsflansch ausgehen, vorgesehen sind.

3. Montageeinrichtung nach Patentanspruch 1, **dadurch gekennzeichnet, dass** das zweite Schieberteil (32) für einen formschlüssigen Eingriff in die Stirnfläche (27) vorgesehen ist, wodurch der Stator (4) von der Montageeinrichtung (29) in einer bestimmten Drehlage zum Getriebegehäuse (1) aufgenommen und in dieses einsetzbar ist.

4. Montageeinrichtung nach Patentanspruch 3, **dadurch gekennzeichnet, dass** das zweite Schieberteil (32) mit sich in axialer Richtung ersteckenden Positionierstiften (33) versehen ist, die für einen Eingriff in Zentrierbohrungen (28) des Stators (4) vorgesehen sind.

5. Montageeinrichtung nach Patentanspruch 1, **dadurch gekennzeichnet, dass** das erste Schieberteil (31) bajonettartig mit einer am Außenumfang des Stators (4) vorgesehene Mitnahmefläche (27) kuppelbar ist.

6. Montageeinrichtung nach Patentanspruch 1, **dadurch gekennzeichnet, dass** das erste und das zweite Schieberteil (31 und 32) jeweils hohlzylindrisch ausgebildet sind, wobei das zweite Schieberteil (32) verschiebbar in dem ersten Schieberteil (31) geführt ist, und dass von dem ersten Schieberteil (31) sich in axialer Richtung erstreckende Greifer (34, 35) ausgehen.

7. Hybridantriebsmodul (2) und Montageeinrichtung (29) nach Anspruch 1 zum Einfügen eines Stators (4) einer elektrischen Maschine (3), die Bestandteil des Hybridantriebsmoduls (2) ist, in ein glockenförmig ausgebildetes, das Hybridantriebsmodul (2) radial umschließendes Getriebegehäuse (1), wobei ein Rotor (5) der elektrischen Maschine (3) über einen Rotorträger (9) sowie eine Rotornabe (9a) zumindest mittelbar mit einer Getriebeeingangswelle (6) verbunden und deren Stator (4), konzentrisch zum Rotor (5) verlaufend sowie diesen radial umschließend, am Getriebegehäuse (1) befestigt ist, **dadurch gekennzeichnet, dass** die Montageeinrichtung (29) ein inneres Führungselement (38) aufweist, das während eines Montagevorgangs formschlüssig gegenüber der Rotornabe (9a) oder der die Rotornabe (9a) aufnehmenden Getriebeeingangswelle (6) geführt ist, dass die Montageeinrichtung (29) über ein äußeres Führungselement (37) formschlüssig am Getriebegehäuse (1) geführt ist, wobei die beiden Führungselemente (37 und 38) radial zueinander beabstandet und über zumindest ein radial verlaufendes Verbindungselement (39) aneinander fixiert sind, und dass im Verbindungselement (39) zumindest ein als Greifer (34, 35) ausgebildeter Schieber (30) längsverschiebbar geführt ist, der den Stator (4) aufnimmt und sowohl gegenüber der Rotornabe (9a) bzw. der Getriebeeingangswelle (6) als gegenüber dem Getriebegehäuse (1) führt.

8. Hybridantriebsmodul und Montageeinrichtung nach Patentansprüche 7, **dadurch gekennzeichnet, dass** der Schieber (30) zwei zueinander verstellbare Schieberteile (31 und 32) aufweist, von denen ein erstes radial äußeres Schieberteil (31) formschlüssigen am Außenumfang des Stators (4) und ein radial inneres Schieberteil (32) an einer Stirnfläche (27) des Stators (4) angreifen.

9. Hybridantriebsmodul und Montageeinrichtung nach Patentansprüche 8, **dadurch gekennzeichnet, dass** der Stator (4) an seiner äußeren Mantelfläche Auswulstungen (21) aufweist, die über einen wesentlichen Teil der axialen Länge des Stators (4) rippenartig verlaufen und an ihren rückseitigen Enden Anschraubflächen (21a) bilden, wobei von einem vorderen Abschnitt der Auswulstungen (21) sich in Umfangsrichtung erstreckende Laschen (26) ausgehen, die jeweils an einer Mitnahmefläche (27) von dem ersten Schieberteil (31) hintergriffen werden.

10. Hybridantriebsmodul und Montageeinrichtung nach Patentansprüche 9, **dadurch gekennzeichnet, dass** die Laschen (26) in axialer Richtung verlaufende Zentrierbohrungen (28) aufweisen, in die während des Montagevorganges Positionierstifte (33) des zweiten Schieberteils (32) und im montierten Zustand des Stators (4) vom Getriebegehäuse (1) ausgehende Passstifte (43) eingreifen.

11. Verfahren zum Montieren eines Stators (4) einer elektrischen Maschine (3), die Bestandteil eines Hybridantriebsmoduls (2) ist, in ein glockenförmig ausgebildetes Getriebegehäuse (1), in das zuvor bereits ein Rotor (5) eingesetzt ist, **dadurch gekennzeichnet, dass** der Stator (4) zunächst von zwei Schieberteilen (31 und 32) einer Montageeinrichtung (29) an einer Stirnfläche und einer an dessen Außenumfang vorgesehenen Mitnahmefläche (27) ergriffen und sowohl in radialer Richtung als auch in Umfangsrichtung zur Montageeinrichtung (29) ausgerichtet wird, dass dann die Montageeinrichtung (29) vor dem Ende des Getriebegehäuses (1) auszentriert wird, wobei ein äußeres Führungselement (37) über in einem Flansch des Getriebegehäuses (1) vorgesehene Bohrungen (14) ausgerichtet und an einem inneren Führungselement (38) eine Rotornabe (9a) und/oder Getriebeeingangswelle (6) zentriert wird, wobei die beiden Führungselemente (37, 38) radial zueinander beabstandet, über zumindest ein radial verlaufendes Verbindungselement (39) aneinander fixiert sind, wobei das innere Führungselement vorgesehen ist, um formschlüssig gegenüber der Rotornabe (9a) oder der die Rotornabe (9a) aufnehmenden Getriebeeingangswelle (6) geführt zu werden, wobei das äußere Führungselement (37) vorgesehen ist, um formschlüssig am Getriebegehäuse (1) geführt zu werden, wobei im Verbindungselement (39) zumindest ein Schieber (30) längsverschiebbar geführt ist, wobei der Schieber (30) zwei zueinander verstellbare Schieberteile (31 und 32) aufweist, von denen ein erstes radial äußeres Schieberteil (31) für einen formschlüssigen Eingriff am Außenumfang des Stators (4) und ein zweites radial inneres Schieberteil (32) für einen Angriff an einer Stirnfläche (27) des Stators (4) vorgesehen sind, dass ein durch die beiden Schieberteile (31 und 32) gebildeter Schieber (30) den Stator (30) in den radialen Raum zwischen dem Rotor (4) und dem Getriebegehäuse (1) verschiebt, bis am Stator (4) vorgesehene Zentrierbohrungen (28) auf Zentrierstifte (43), die vom Getriebegehäuse (1) ausgehen, aufgeschoben sind, dass der Stator (4) mit dem Getriebegehäuse (1) über axial verlaufende Schrauben (22) verschraubt wird, und dass schließlich die Montageeinrichtung (29) zunächst vom Stator (4) sowie anschließend vom Getriebegehäuse (1) und der Rotornabe (9a) bzw. Getriebeeingangswelle (6) getrennt wird.

## Claims

1. Mounting device (29) for inserting a stator (4) of an electric machine (3) which is a constituent part of a hybrid drive module (2) into a transmission housing (1) of bell-shaped configuration, a rotor (5) of the electric machine (3) being connected via a rotor carrier (9) and a rotor hub (9a) at least indirectly to a transmission input shaft (6), and it being possible for its stator (4), running concentrically with respect to the rotor (5) and enclosing the latter radially, to be fastened to the transmission housing (1), **characterized in that** the mounting device (29) has an inner guide element (38) which is provided to be guided in a positively locking manner with respect to the rotor hub (9a) or the transmission input shaft (6) which receives the rotor hub (9a), **in that** the mounting device (29) has an outer guide element (37) in order to be guided in a positively locking manner on the transmission housing (1), **in that** the two guide elements (37 and 38), spaced apart radially from one another, are fixed on one another via at least one radially running connecting element (39), and **in that** at least one slide (30) is guided longitudinally displaceably in the connecting element (39), the slide (30) having two slide parts (31 and 32) which can be adjusted with respect to one another and of which a first radially outer slide part (31) is provided for positively locking engagement on the outer circumference of the stator (4) and a second radially inner slide part (32) is provided for action on an end face (27) of the stator (4) .

2. Mounting device according to Patent Claim 1, **characterized in that** centring pins (41) extend axially from the outer guide element (37), the centring pins (41) being provided for engagement into the through holes (14) of the transmission housing (1) which emanate from a fastening flange which is configured on the said transmission housing (1).

3. Mounting device according to Patent Claim 1, **characterized in that** the second slide part (32) is provided for positively locking engagement into the end face (27), as a result of which the stator (4) is received by the mounting device (29) in a defined rotary position with respect to the transmission housing (1) and can be inserted into the latter.

4. Mounting device according to Patent Claim 3, **characterized in that** the second slide part (32) is provided with positioning pins (33) which extend in the axial direction and are provided for engagement into centring bores (28) of the stator (4).

5. Mounting device according to Patent Claim 1, **characterized in that** the first slide part (31) can be coupled in a bayonet-like manner to a driving face (27) which is provided on the outer circumference of the stator (4).

6. Mounting device according to Patent Claim 1, **characterized in that** the first and the second slide part (31 and 32) are in each case of hollow-cylindrical configuration, the second slide part (32) being guided displaceably in the first slide part (31), and **in that** grippers (34, 35) which extend in the axial direction emanate from the first slide part (31).

7. Hybrid drive module (2) and mounting device (29) according to Claim 1 for inserting a stator (4) of an electric machine (3) which is a constituent part of the hybrid drive module (2) into a transmission housing (1) of bell-shaped configuration which encloses the hybrid drive module (2) radially, the rotor (5) of the electric machine (3) being connected via a rotor carrier (9) and a rotor hub (9a) at least indirectly to a transmission input shaft (6), and its stator (4) being fastened to the transmission housing (1) so as to run concentrically with respect to the rotor (5) and so as to enclose the latter radially, **characterized in that** the mounting device (29) has an inner guide element (38) which, during a mounting operation, is guided in a positively locking manner with respect to the rotor hub (9a) or the transmission input shaft (6) which receives the rotor hub (9a), **in that** the mounting device (29) is guided in a positively locking manner on the transmission housing (1) via an outer guide element (37), the two guide elements (37 and 38) being spaced apart radially from one another and being fixed on one another via at least one radially running connecting element (39), and **in that** at least one slide (30) which is configured as a gripper (34, 35) is guided longitudinally displaceably in the connecting element (39), which slide (30) receives the stator (4) and guides it both with respect to the rotor hub (9a) or the transmission input shaft (6) and with respect to the transmission housing (1).

8. Hybrid drive module and mounting device according to Patent Claim 7, **characterized in that** the slide (30) has two slide parts (31 and 32) which can be adjusted with respect to one another and of which a first radially outer slide part (31) acts in a positively locking manner on the outer circumference of the stator (4) and a radially inner slide part (32) acts on an end face (27) of the stator (4).

9. Hybrid drive module and mounting device according to Patent Claim 8, **characterized in that**, on its outer shell surface, the stator (4) has bead formations (21) which extend in a rib-like manner over a substantial part of the axial length of the stator (4) and form screw-on surfaces (21a) at their rear-side ends, lugs (26) which extend in the circumferential direction and are engaged behind in each case on a driving surface (27) by the first slide part (31) emanating from a front portion of the bead formations (21).

10. Hybrid drive module and mounting device according to Patent Claim 9, **characterized in that** the lugs (26) have centring bores (28) which run in the axial direction and into which positioning pins (33) of the second slide part (32) engage during the mounting operation and locating pins (43) which emanate from the transmission housing (1) engage in the mounted state of the stator (4) .

11. Method for mounting a stator (4) of an electric machine (3) which is a constituent part of a hybrid drive module (2) into a transmission housing (1) of bell-shaped configuration, into which a rotor (5) has previously already been inserted, **characterized in that** the stator (4) is first of all gripped by two slide parts (31 and 32) of a mounting device (29) on an end surface and a driving surface (27) provided on its outer circumference, and is oriented both in the radial direction and in the circumferential direction with respect to the mounting device (29), **in that** the mounting device (29) is then centred in front of the end of the transmission housing (1), an outer guide element (37) being oriented via bores (14) provided in a flange of the transmission housing (1), and a rotor hub (9a) and/or transmission input shaft (6) being centred on an inner guide element (38), the two guide elements (37, 38) then being fixed to one another, spaced apart from one another radially, via at least one radially running connecting element (39), the inner guide element being provided to be guided in a positively locking manner with respect to the rotor hub (9a) or the transmission input shaft (6) which receives the rotor hub (9a), the outer guide element (37) being provided to be guided in a positively locking manner on the transmission housing (1), at least one slide (30) being guided longitudinally displaceably in the connecting element (39), the slide (30) having two slide parts (31 and 32) which can be adjusted with respect to one another and of which a first radially outer slide part (31) is provided for positively locking engagement on the outer circumference of the stator (4) and a second radially inner slide part (32) is provided for acting on an end surface (27) of the stator (4), **in that** a slide (30) which is formed by way of the two slide parts (31 and 32) displaces the stator (30) into the radial space between the rotor (4) and the transmission housing (1) until centring bores (28) which are provided on the stator (4) are pushed onto centring pins (43) which emanate from the transmission housing (1), **in that** the stator (4) is screwed to the transmission housing (1) via axially running screws (22), and **in that** finally the mounting device (29) is disconnected firstly from the stator (4) and subsequently from the transmission housing (1) and the rotor hub (9a) or transmission input shaft (6).

## Revendications

1. Dispositif de montage (29) permettant d'insérer un stator (4) d'une machine électrique (3), qui fait partie d'un module d'entraînement hybride (2), dans un carter de transmission (1) réalisé en forme de cloche, un rotor (5) de la machine électrique (3) étant relié, par le biais d'un support de rotor (9) ainsi que d'un moyeu de rotor (9a), au moins indirectement à un arbre d'entrée de transmission (6) et son stator (4), s'étendant concentriquement au rotor (5) et entourant celui-ci radialement, pouvant être fixé au carter de transmission (1), **caractérisé en ce que** le dispositif de montage (29) présente un élément de guidage intérieur (38) qui est prévu pour être guidé par complémentarité de formes par rapport au moyeu de rotor (9a) ou à l'arbre d'entrée de transmission (6) recevant le moyeu de rotor (9a), **en ce que** le dispositif de montage (29) présente un élément de guidage extérieur (37) pour être guidé par complémentarité de formes sur le carter de transmission (1), **en ce que** les deux éléments de guidage (37 et 38) sont fixés l'un à l'autre par le biais d'au moins un élément de liaison (39) s'étendant radialement, de manière espacée radialement l'un de l'autre, et **en ce qu'**au moins un coulisseau (30) est guidé de manière mobile longitudinalement dans l'élément de liaison (39), le coulisseau (30) présentant deux parties de coulisseau (31 et 32) déplaçables l'une par rapport à l'autre, parmi lesquelles une première partie de coulisseau (31) radialement extérieure est prévue pour une entrée en prise par complémentarité de formes niveau de la périphérie extérieure du stator (4) et une deuxième partie de coulisseau (32) radialement intérieure est prévue pour une entrée en prise au niveau d'une surface frontale (27) du stator (4).

2. Dispositif de montage selon la revendication 1, **caractérisé en ce que** des goupilles de centrage (41) s'étendent axialement à partir de l'élément de guidage extérieur (37), les goupilles de centrage (41) étant prévues pour une entrée en prise dans des alésages traversants (14) du carter de transmission (1) qui partent d'une bride de fixation réalisée au niveau de ce carter.

3. Dispositif de montage selon la revendication 1, **caractérisé en ce que** la deuxième partie de coulisseau (32) est prévue pour une entrée en prise par complémentarité de formes dans la surface frontale (27), de sorte que le stator (4), dans une certaine position de rotation par rapport au carter de transmission (1), soit reçu par le dispositif de montage (29) et puisse être inséré dans le carter de transmission.

4. Dispositif de montage selon la revendication 3, **caractérisé en ce que** la deuxième partie de coulisseau (32) est dotée de goupilles de positionnement (33) s'étendant dans la direction axiale, qui sont prévues pour une entrée en prise dans des alésages de centrage (28) du stator (4) .

5. Dispositif de montage selon la revendication 1, **caractérisé en ce que** la première partie de coulisseau (31) peut être accouplé, à la manière d'une baïonnette, à une surface d'entraînement (27) prévue à la périphérie extérieure du stator (4).

6. Dispositif de montage selon la revendication 1, **caractérisé en ce que** la première et la deuxième partie de coulisseau (31 et 32) sont réalisées respectivement de manière cylindrique creuse, la deuxième partie de coulisseau (32) étant guidée de manière mobile dans la première partie de coulisseau (31), et **en ce que** des éléments de préhension (34, 35) s'étendant dans la direction axiale partent de la première partie de coulisseau (31).

7. Module d'entraînement hybride (2) et dispositif de montage (29) selon la revendication 1 permettant d'insérer un stator (4) d'une machine électrique (3), qui fait partie du module d'entraînement hybride (2), dans un carter de transmission (1) réalisé en forme de cloche, entourant radialement le module d'entraînement hybride (2), un rotor (5) de la machine électrique (3) étant relié, par le biais d'un support de rotor (9) ainsi que d'un moyeu de rotor (9a), au moins indirectement à un arbre d'entrée de transmission (6) et son stator (4), s'étendant concentriquement au rotor (5) et entourant celui-ci radialement, étant fixé au carter de transmission (1), **caractérisé en ce que** le dispositif de montage (29) présente un élément de guidage intérieur (38) qui est guidé par complémentarité de formes par rapport au moyeu de rotor (9a) ou à l'arbre d'entrée de transmission (6) recevant le moyeu de rotor (9a) pendant une opération de montage, **en ce que** le dispositif de montage (29) est guidé par complémentarité de formes sur le carter de transmission (1) par le biais d'un élément de guidage extérieur (37), les deux éléments de guidage (37 et 38) étant fixés l'un à l'autre de manière espacée radialement l'un de l'autre et par le biais d'au moins un élément de liaison (39) s'étendant radialement, et **en ce qu'**au moins un coulisseau (30) réalisé sous forme d'élément de préhension (34, 35) est guidé de manière mobile longitudinalement dans l'élément de liaison (39), lequel coulisseau reçoit le stator (4) et le guide à la fois par rapport au moyeu de rotor (9a) ou à l'arbre d'entrée de transmission (6) et par rapport au carter de transmission (1).

8. Module d'entraînement hybride et dispositif de montage selon la revendication 7, **caractérisé en ce que** le coulisseau (30) présente deux parties de coulisseau (31 et 32) déplaçables l'une par rapport à l'autre, parmi lesquelles une première partie de coulisseau (31) radialement extérieure vient en prise par complémentarité de formes niveau de la périphérie extérieure du stator (4) et une partie de coulisseau (32) radialement intérieure vient en prise au niveau d'une surface frontale (27) du stator (4).

9. Module d'entraînement hybride et dispositif de montage selon la revendication 8, **caractérisé en ce que** le stator (4) présente au niveau de sa surface d'enveloppe extérieure des renflements (21) qui s'étendent en forme de nervures sur une grande partie de la longueur axiale du stator (4) et forment, à leurs extrémités arrière, des surfaces de vissage (21a), des languettes (26) s'étendant dans la direction périphérique partant d'une section avant des renflements (21), languettes avec lesquelles viennent en prise par l'arrière respectivement la première partie de coulisseau (31) au niveau d'une surface d'entraînement (27).

10. Module d'entraînement hybride et dispositif de montage selon la revendication 9, **caractérisé en ce que** les languettes (26) présentent des alésages de centrage (28) s'étendant dans la direction axiale, dans lesquels viennent en prise, pendant l'opération de montage, des goupilles de positionnement (33) de la deuxième partie de coulisseau (32) et, dans l'état monté du stator (4), des goupilles de repérage (43) partant du carter de transmission (1).

11. Procédé de montage d'un stator (4) d'une machine électrique (3), qui fait partie d'un module d'entraînement hybride (2), dans un carter de transmission (1) réalisé en forme de cloche, dans lequel un rotor (5) est déjà préalablement inséré, **caractérisé en ce que** le stator (4) est tout d'abord saisi par deux parties de coulisseau (31 et 32) d'un dispositif de montage (29) au niveau d'une surface frontale et d'une surface d'entraînement (27) prévue au niveau de sa périphérie extérieure et est orienté à la fois dans la direction radiale et dans la direction périphérique par rapport au dispositif de montage (29), **en ce qu'**ensuite le dispositif de montage (29) est centré devant l'extrémité du carter de transmission (1), un élément de guidage extérieur (37) étant orienté par le biais d'alésages (14) prévus dans une bride du carter de transmission (1) et, au niveau d'un élément de guidage intérieur (38), un moyeu de rotor (9a) et/ou un arbre d'entrée de transmission (6) étant centré(s), les deux éléments de guidage (37, 38) étant fixés l'un à l'autre par le biais d'au moins un élément de liaison (39) s'étendant radialement, de manière espacée radialement l'un de l'autre, l'élément de guidage intérieur étant prévu pour être guidé par complémentarité de formes par rapport au moyeu de rotor (9a) ou à l'arbre d'entrée de transmission (6) recevant le moyeu de rotor (9a), l'élément de guidage extérieur (37) étant prévu pour être guidé par complémentarité de formes au niveau du carter de transmission (1), au moins un coulisseau (30) étant guidé de manière mobile longitudinalement dans l'élément de liaison (39), le coulisseau (30) présentant deux parties de coulisseau (31 et 32) déplaçables l'une par rapport à l'autre, parmi lesquelles une première partie de coulisseau (31) radialement extérieure est prévue pour une entrée en prise par complémentarité de formes niveau de la périphérie extérieure du stator (4) et une deuxième partie de coulisseau (32) radialement intérieure est prévue pour une entrée en prise au niveau d'une surface frontale (27) du stator (4), **en ce qu'**un coulisseau (30) formé par les deux parties de coulisseau (31 et 32) déplace le stator (30) dans l'espace radial entre le rotor (4) et le carter de transmission (1) jusqu'à ce que des alésages de centrage (28) prévus sur le stator (4) soient enfilés sur des goupilles de centrage (43) qui partent du carter de transmission (1), **en ce que** le stator (4) est vissé sur le carter de transmission (1) par le biais de vis (22) s'étendant axialement, et **en ce que** finalement le dispositif de montage (29) est séparé tout d'abord du stator (4) et ensuite du carter de transmission (1) et du moyeu de rotor (9a) ou de l'arbre d'entrée de transmission (6).
